# EUROPEAN PATENT APPLICATION

(11) **EP 4 492 176 A1**
(43) Date of publication of application: **15.01.2025**
(21) Application number: 24182198.2
(22) Date of filing: 14.06.2024
(51) Int. Cl.: G05B 23/02, H04N 7/18

(54) **MONITORING DATA PROCESSING DEVICE**

(30) Priority: 10.07.2023 JP 2023113018
(71) Applicant: ASAHI-SEIKI MANUFACTURING CO., LTD., Owariasahi-shi Aichi 488-8655 (JP)
(72) Inventor: NAKAZAKI, Yasuo, Owariasahi-shi, 488-8655 (JP)
(74) Representative: Kramer Barske Schmidtchen Patentanwälte PartG mbB

(57) **Abstract**

A monitoring data processing device (30A) of the present embodiment includes: a data recording unit (25) configured to store, in a storage unit (17), data of a video of a transfer press machine (50) captured by first and second monitoring cameras (11,12), and chronological data of a state of the transfer press machine (50) during capturing; and an image display unit (26A) configured to generate chronological images (40,46,47) along a time axis from the chronological data for a certain past period and display the chronological images (40,46,47) on a monitor (20). By selecting any position along the time axis on the chronological image (40,46,47) with the console (23), a video corresponding to the selected position is displayed on the monitor (20).

## Description

### BACKGROUND OF THE INVENTION

### (1) Field of the Invention

The present invention relates to a monitoring data processing device that acquires data of a video of an industrial machine captured by a monitoring camera and displays the data on a monitor.

### (2) Description of Related Art

As a monitoring data processing device, a device capable of selecting and playing any specific moment in a video in a certain past period is known (see, for example, JP 7195729 B2 (FIG. 1, FIG. 10, paragraph [0089])).

### SUMMARY OF THE INVENTION

However, in the conventional monitoring data processing device described above, for example, when an abnormality occurs or a predetermined measurement result changes, there is a problem in that it takes time and effort to find a special moment in a video at which the abnormality, the change, or the like occurs when the video at the special moment is tried to be viewed. Therefore, the present application discloses a technique for easily finding a special moment in a video of an industrial machine.

A monitoring data processing device according to an aspect of the present invention includes: a data recording unit configured to acquire and store, in a storage unit, data of a video of an industrial machine captured by a monitoring camera, and chronological data of a state or a physical quantity of the industrial machine during capturing or a workpiece manufactured by the industrial machine; an image display unit configured to generate a chronological image visually indicating a change in the chronological data along a time axis from the chronological data for a certain past period and display the chronological image on a monitor, and to display a slider superimposed on the chronological image to indicate a position on the chronological image along the time axis; a console configured to move the slider to any position along the time axis in a state where the chronological image is fixed; and a video display unit configured to display, on the monitor, the video of the industrial machine at a time corresponding to a position of the slider, in which the chronological data stored in the storage unit includes first chronological data that enables distinguishing of whether the industrial machine is in an operation state or a stop state, and the chronological image based on the first chronological data is generated so as to indicate the operation state or the stop state in a distinguishable manner.

### BRIEF DESCRIPTION OF THE DRAWINGS

FIG. 1 is a front view of a transfer press machine as an example of an industrial machine according to a first embodiment;
FIG. 2 is a block diagram of the transfer press machine and a monitoring system;
FIG. 3 is a block diagram of a monitoring data processing device;
FIG. 4 is a conceptual diagram of a first monitoring screen;
FIG. 5 is a conceptual diagram of a second monitoring screen;
FIG. 6 is a conceptual diagram of the second monitoring screen;
FIG. 7 is a conceptual diagram of a third monitoring screen;
FIG. 8 is a conceptual diagram of an input operation screen; and
FIG. 9 is a conceptual diagram of a search operation screen according to a second embodiment.

### DETAILED DESCRIPTION OF PREFERRED EMBODIMENTS

### [First embodiment]

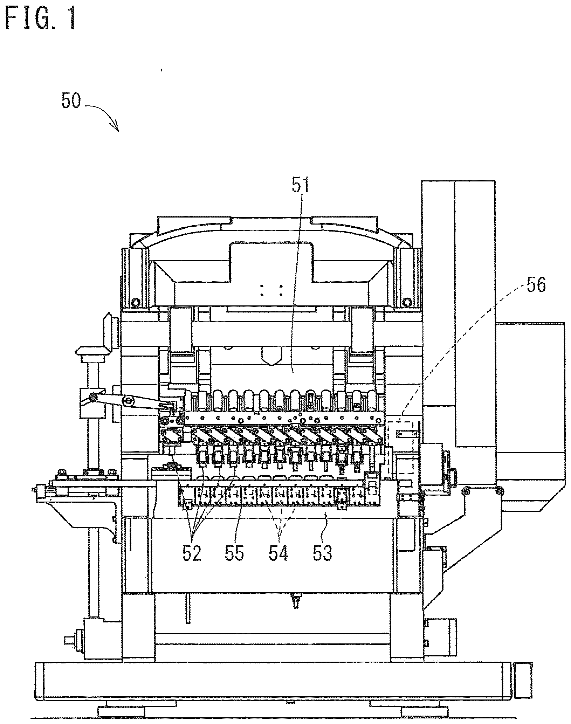

An embodiment of a monitoring system 10A including a monitoring data processing device 30A will be described with reference to FIGS. 1 to 8. FIG. 1 illustrates a transfer press machine 50 as an example of an industrial machine to be monitored by the monitoring system 10A. The transfer press machine 50 manufactures a cylindrical workpiece from sheet metal by a plurality of punches 52 arranged side by side on the lower surface of a ram 51 and a plurality of dies 54 arranged side by side on the upper surface of a bolster 53.

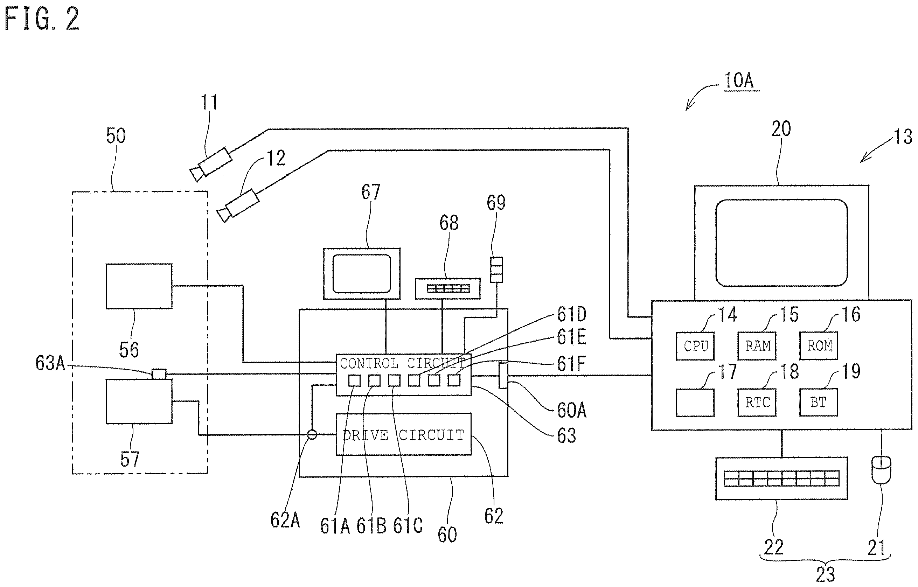

Specifically, each time the ram 51 moves up and down, for example, a circular or elliptical blank material is punched out from the sheet metal by the punch 52 at the left end in FIG. 1, and the blank material is formed into a cylindrical intermediate workpiece. Each time the ram 51 moves up and down, the intermediate workpiece is sequentially conveyed to the processing stage of the punch 52 on the right side in FIG. 1 by a transfer device 55 to be drawn or ironed, and finally formed into, for example, a rectangular cylindrical workpiece. A workpiece gauging device 56 is provided at the right end part of the transfer press machine 50 in FIG. 1, dimensions of the height, the depth, and the width of the completed workpiece are automatically gauged, and the gauged results are taken into a controller 60 of the transfer press machine 50 illustrated in FIG. 2.

As illustrated in FIG. 2, the controller 60 includes a drive circuit 62 that drives various electric devices of the transfer press machine 50, a control circuit 63 that controls the drive circuit 62, a monitor 67, a console 68, and a warning light 69. The control circuit 63 includes a CPU 61A, a RAM 61B, a ROM 61C, an auxiliary storage device 61D (for example, HDD or SSD), a real-time clock 61E (hereinafter, referred to as "RTC 61E"), a backup power supply 61F, and the like. When a continuous operation button provided in the console 68 is turned on, the CPU 61A executes a workpiece manufacturing program stored in the ROM 61C, and the transfer press machine 50 is brought into an operation state of sequentially manufacturing a plurality of workpieces as described above. When manufacturing of a preset number of workpieces is completed or an operation end button provided in the console 68 is turned on, the transfer press machine 50 is brought into a stop state.

The transfer press machine 50 includes a plurality of measuring instruments for detecting an abnormality, and the measured results are stored in the auxiliary storage device 61D. Examples thereof include an ammeter 62A that detects a current of a main motor 57 as a drive source of the ram 51 and a temperature sensor 63A that detects a temperature of the main motor 57. The measured data obtained by the ammeter 62A and the temperature sensor 63A is taken into the CPU 61A at a predetermined cycle, made into chronological data (specifically, log data) attached with time data obtained by the RTC 61E, and stored in the auxiliary storage device 61D. In addition, the gauged data obtained by the workpiece gaging device 56 described above is also stored in the auxiliary storage device 61D as chronological data attached with time data.

In the above example, the current, the temperature, and the dimensions are exemplified as the physical quantity measured or gauged by the measuring instruments or the workpiece gauging device, but the physical quantity may be other than the current and the like as long as the physical quantity can change chronologically. In addition, the chronological data may not be log data as long as it is data that can specify the time when the physical quantity is measured or the like.

The CPU 61A compares the measured result of each measuring instrument with a reference value, and in a case where the measured result exceeds a first reference value, the warning lamp 69 is turned on in a warning color, and in a case where the measurement result exceeds a second reference value, the warning lamp 69 is turned on in a color indicating abnormality, and the transfer press machine 50 is forced to make an emergency stop. When an emergency stop button (not illustrated) provided in the console 68 is turned on or a safety fence (not illustrated) surrounding the transfer press machine 50 is opened, the CPU 61A also determines that there is an abnormality and forces the transfer press machine 50 into emergency stop. Then, in the case of emergency stop, the restart of the transfer press machine 50 is not allowed unless the abnormality is resolved and a reset operation is performed. In addition, even if the reset operation is performed, it becomes invalid unless the abnormality is resolved.

The CPU 61A generates state data for identifying whether the state of the transfer press machine 50 is an operation state, an abnormal stop state having an abnormality, or a normal stop state having no abnormality. Then, time data is acquired from the RTC 61E at the timing when the state is switched, and this time data is added to the state data to generate chronological data. The chronological data of the state data is also stored in the auxiliary storage device 61D similarly to the chronological data of the measurement data described above. The controller 60 includes a data output unit 60A for outputting the chronological data stored in the auxiliary storage device 61D to the outside.

As illustrated in FIG. 2, the monitoring system 10A of the present embodiment that monitors the transfer press machine 50 includes, for example, first and second monitoring cameras 11 and 12 and a personal computer 13. The first monitoring camera 11 is installed so as to capture an image of a processing stage of the transfer press machine 50 for punching a blank material from sheet metal, for example. The second monitoring camera 12 is installed to capture images of a plurality of processing stages for drawing an intermediate workpiece, for example. The first and the second monitoring cameras 11 and 12 include, for example, an RTC (not illustrated), and output captured videos as video data with time data.

The personal computer 13 includes a CPU 14, a RAM 15, a ROM 16, an auxiliary storage device 17, an RTC 18, a backup power supply 19, a monitor 20, and a console 23 including a mouse 21 and a keyboard 22. The personal computer 13 is connected to the first and the second monitoring cameras 11 and 12 and the controller 60 of the transfer press machine 50 in a wired or wireless manner.

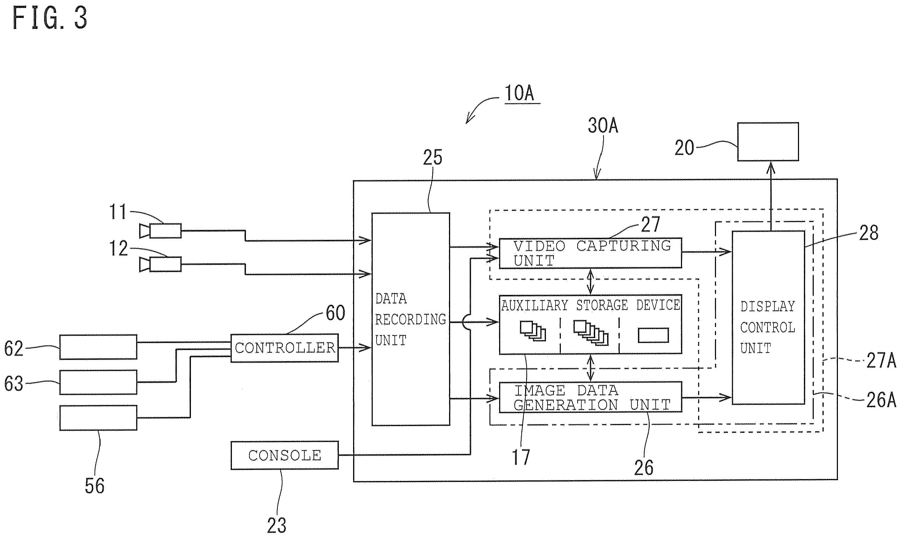

The personal computer 13 functions as the monitoring data processing device 30A illustrated in the block diagram of FIG. 3 when the CPU 14 executes a monitoring data program installed in the auxiliary storage device 17.

The monitoring data processing device 30A includes a data recording unit 25, an image data generation unit 26, a video acquisition unit 27, and a display control unit 28. The image data generation unit 26 and the display control unit 28 constitute an image display unit 26A, and the video acquisition unit 27 and the display control unit 28 constitute a video display unit 27A.

The data recording unit 25 acquires video data output from the first and the second monitoring cameras 11 and 12, and stores the video data in the auxiliary storage device 17. At this time, the video data is divided into video files of a predetermined period (for example, 1 minute, 10 minutes, or the like) and stored in the auxiliary storage device 17. The data recording unit 25 acquires each chronological data of the gauged data, the measured data, and the state data described above from the controller 60 of the transfer press machine 50 and stores the acquired data in the auxiliary storage device 17. The chronological data has been taken during capturing of the video stored in the auxiliary storage device 17, and is stored in the auxiliary storage device 17 as a chronological data file associated with the video file.

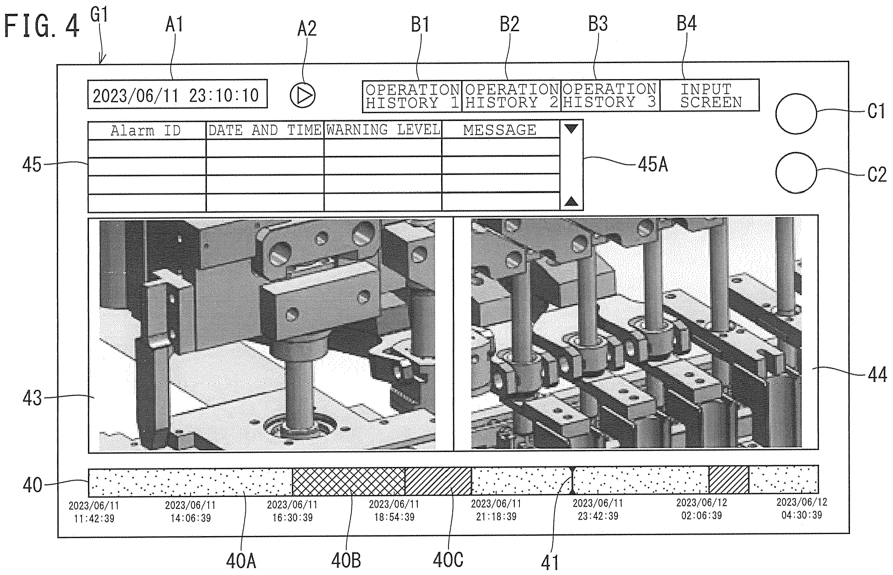

The image data generation unit 26 generates a chronological image on the basis of chronological data of a certain past period stored in the auxiliary storage device 17. The image data generation unit 26 acquires a plurality of template screens stored in the auxiliary storage device 17, inserts a chronological image into a predetermined display area of the template screens, and generates image data of a plurality of monitoring/operation screens including the first to the third monitoring screens G1 to G3 and the input operation screen G4 illustrated in FIGS. 4 to 8. Then, the image data of the monitoring/operation screens is provided to the display control unit 28, and the display control unit 28 displays the monitoring/operation screens corresponding to the provided image data on the monitor 20. At that time, the display control unit 28 incorporates a video based on the video data from the video acquisition unit 27 into a predetermined display area provided on the monitoring/operation screens, and displays the video on the monitor 20.

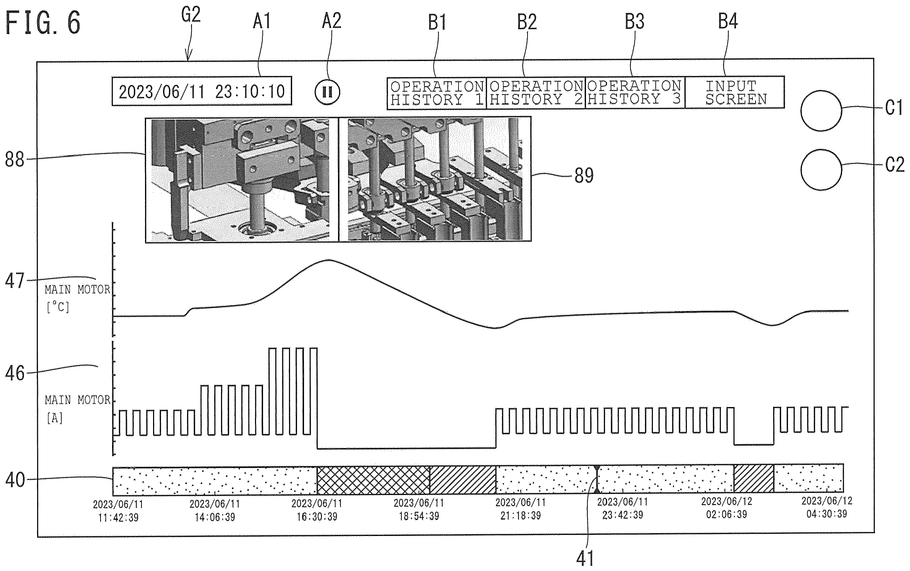

Specifically, as illustrated in FIGS. 4 to 8, the first to the third monitoring screens G1 to G3 and the input operation screen G4 (collectively referred to as "monitoring/operation screens G1 to G4") are configured to display the following items in common. That is, in the monitoring/operation screens G1 to G4, a time display part A1 is provided at the upper left end, and a play/stop button A2 is provided on the right side thereof. The play/stop button A2 is pressed with the mouse 21 to switch between a state in which a play icon illustrated in FIG. 4 is displayed and a state in which a stop icon illustrated in FIG. 6 is displayed. The time display part A1 will be described later.

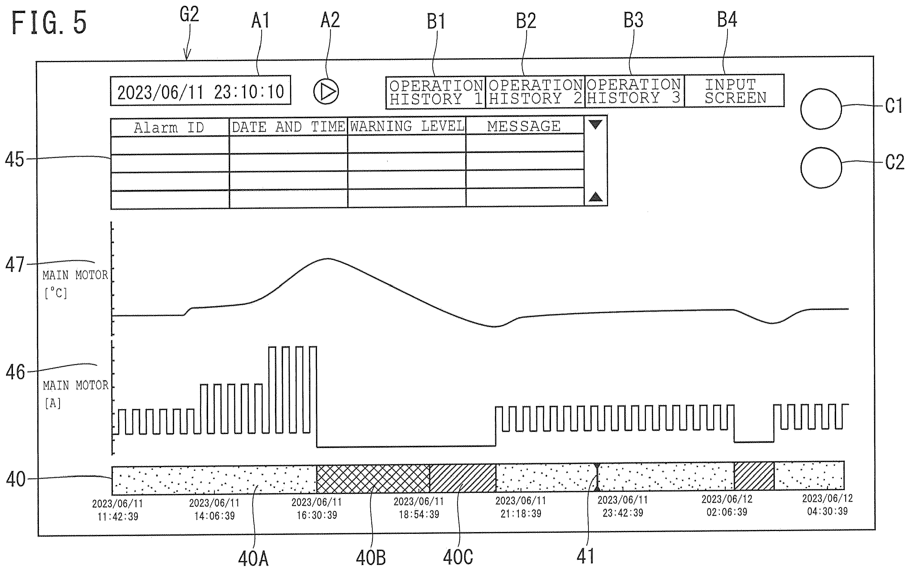

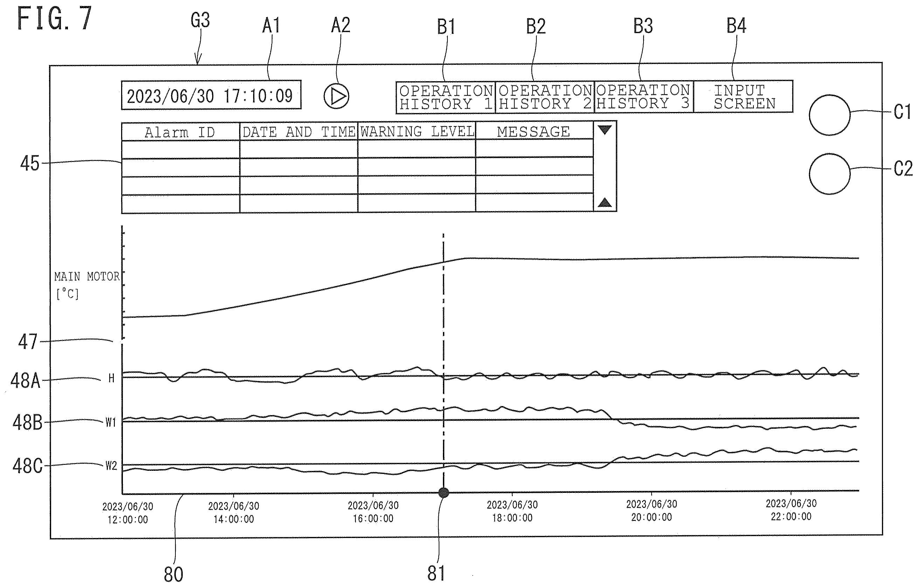

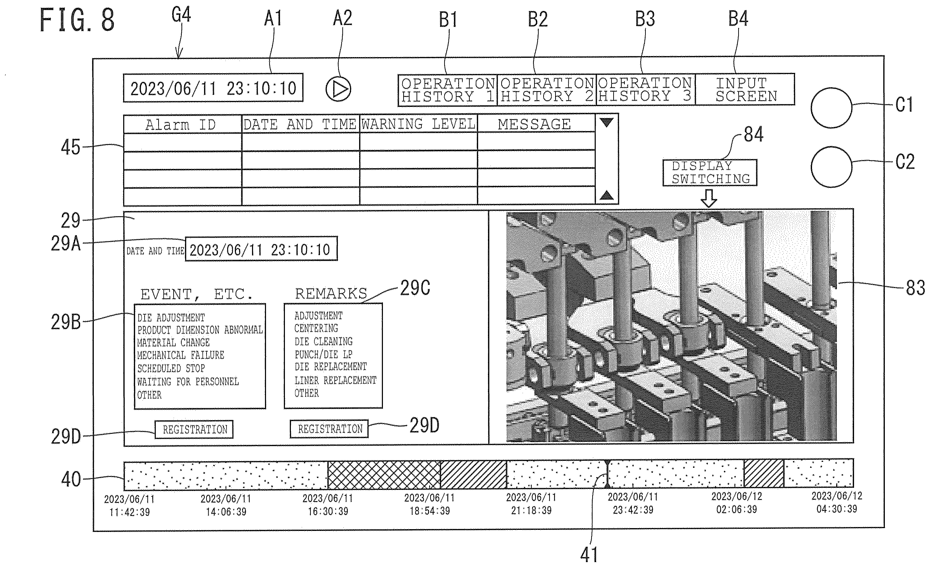

In the monitoring/operation screens G1 to G4, a plurality of screen selection buttons B1, B2, B3, and B4 that can be turned on with the console 23 are provided in an area from the position adjacent to the right of the play/stop button A2 to the right end part. The image data generation unit 26 provides the image data of the first monitoring screen G1 illustrated in FIG. 4 to the display control unit 28 when the screen selection button B1 indicating "operation history 1" is turned on with the mouse 21. The image data generation unit 26 provides the image data of the second monitoring screen G2 illustrated in FIG. 5 to the display control unit 28 when the screen selection button B2 indicating "operation history 2" is turned on. The image data generation unit 26 provides the image data of the third monitoring screen G3 illustrated in FIG. 7 to the display control unit 28 when the screen selection button B3 indicating "operation history 3" is turned on. The image data generation unit 26 provides the image data of the input operation screen G4 illustrated in FIG. 8 to the display control unit 28 when the screen selection button B4 indicating "input screen" is turned on. In an initial state where the console 23 is not operated, the image data generation unit 26 gives the image data of the first monitoring screen G1 illustrated in FIG. 4 to the display control unit 28.

A first lighting unit C1 indicating whether the current state of the transfer press machine 50 is the operation state or the stop state and a second lighting unit C2 indicating whether an alarm is occurring in the transfer press machine 50 are provided in the upper right part of the monitoring/operation screens G1 to G4.

Each of the monitoring/operation screens G1 to G4 is configured as follows. As illustrated in FIG. 4, a state display bar 40 as "chronological image" is displayed in a lower side part of the first monitoring screen G1. The state display bar 40 is a bar extending in the lateral direction, and the image data generation unit 26 generates the state display bar 40 on the basis of the chronological data of the state data stored in the auxiliary storage device 17.

Specifically, the entire length of the state display bar 40 corresponds to the time in the certain past period, and the time passes from left to right, and an arbitrary position in the longitudinal direction of the state display bar 40 shows a corresponding arbitrary moment in the certain past period. In addition, dates and times corresponding to a plurality of positions on the state display bar 40 are given adjacent to the lower side of the state display bar 40. The state display bar 40 is color-coded into three colors according to the state of the transfer press machine 50. In FIG. 4, the hatching of the dots of the state display bar 40 (the hatching of the part denoted by reference numeral 40A in FIG. 4) is a first color, the hatching of the cross (the hatching of the part denoted by reference numeral 40B in FIG. 4) is a second color, and the hatching of the diagonal lines (the hatching of the part denoted by reference numeral 40C in FIG. 4) is a third color. The first color means that the transfer press machine 50 is in the operation state, the second color means that the transfer press machine 50 is in the abnormal stop state, and the third color means that the transfer press machine 50 is in the normal stop state.

The image data generation unit 26 displays a slider 41 to be superimposed on the state display bar 40. The slider 41 has, for example, a shape of a vertical line extending over the entire vertical width of the state display bar 40 with triangular shapes overlapping respectively both ends of the slider 41. The slider 41 can be slid to any position on the state display bar 40 according to the operation of the console 23. Specifically, the slider 41 can be slid by placing a pointer displayed on the monitor 20 over the slider 41 and dragging the slider 41 by operating the mouse 21 or by pressing an arrow key provided on the keyboard 22. Then, the date and time corresponding to the position of the slider 41 on the state display bar 40 is displayed on the time display part A1 described above.

Above the state display bar 40 in the first monitoring screen G1, video display windows 43 and 44 are arranged side by side. The left video display window 43 in FIG. 4 is for displaying a video captured by the first monitoring camera 11, and the right video display window 44 is for displaying a video captured by the second monitoring camera 12.

In a state where the play/stop button A2 displays the play icon, that is, in a state where a video is not played, so-called real-time videos currently being captured by the first and the second monitoring cameras 11 and 12 are displayed in the video display windows 43 and 44. Specifically, the video acquisition unit 27 acquires the video data from the first and the second monitoring cameras 11 and 12 through the data recording unit 25 and gives the video data to the display control unit 28, so that real-time videos are displayed in the video display windows 43 and 44.

When the play icon of the play/stop button A2 is pressed and the play/stop button A2 is switched to the stop icon, the videos of the date and time displayed on the time display part A1, that is, the date and time corresponding to the position of the slider 41 on the state display bar 40 is displayed in the video display windows 43 and 44.

Specifically, the video acquisition unit 27 acquires the video files including the date and time corresponding to the position of the slider 41 in the state display bar 40 from the auxiliary storage device 17 and gives the video files to the display control unit 28. The display control unit 28 plays the videos of the date and time corresponding to the position of the slider 41 on the basis of those video files and displays the videos in the video display windows 43 and 44.

While those videos are being played, the slider 41 moves on the state display bar 40 according to the progress of the videos, and the date and time displayed on the time display part A1 also changes. Furthermore, by dragging the slider 41 with the mouse 21 to move the position on the state display bar 40, the videos displayed in the video display windows 43 and 44 are changed correspondingly.

An alarm display part 45 is provided above the video display windows 43 and 44 in the first monitoring screen G1. The alarm display part 45 includes fields such as "Alarm ID", "Date and time", "Warning level", and "Message", and displays a number of the alarm, occurrence date and time, a warning level of the alarm, a message, and the like in a certain past period corresponding to the state display bar 40. A scroll operation part 45A is provided at the right end of the alarm display part 45, and the entire displayed content can be viewed on the alarm display part 45 by operating the scroll operation part 45A.

Next, the second monitoring screen G2 will be described with reference to FIGS. 5 and 6. As illustrated in FIG. 5, on the second monitoring screen G2, graphs 46 and 47 as "chronological image" are displayed to be aligned in the vertical direction instead of the video display windows 43 and 44 of the first monitoring screen G1. In the lower graph 46, the horizontal axis represents time, and the vertical axis represents the current value of the main motor 57. On the other hand, in the upper graph 47, the horizontal axis represents time, and the vertical axis represents the temperature of the main motor 57. The time axis which is the horizontal axis of the graphs 46 and 47 and the time axis in the longitudinal direction of the state display bar 40 coincide with each other. That is, the graphs 46 and 47 and the state display bar 40 are displayed such that, when a vertical line (not illustrated) perpendicular to the horizontal axis of the graphs 46 and 47 is disposed at an arbitrary position of the horizontal axis, the dates and times specified at the positions where the vertical line intersects the graphs 46 and 47 and the state display bar 40 are all the same date and time.

In a state where the play/stop button A2 displays the play icon on the second monitoring screen G2, the alarm display part 45 described in the description of the first monitoring screen G1 is displayed above the graph 47. When the play icon of the play/stop button A2 is pressed and switched to the stop icon as illustrated in FIG. 6, video display windows 88 and 89 are displayed instead of the alarm display part 45. The video display windows 88 and 89 are obtained by reducing the video display windows 43 and 44 of the first monitoring screen G1 described above, and videos of the date and time displayed on the time display part A1 are displayed in the video display windows 88 and 89, similarly to the video display windows 43 and 44.

Next, the third monitoring screen G3 will be described with reference to FIG. 7. As illustrated in FIG. 7, on the third monitoring screen G3, the graph 47 and graphs 48A to 48C as "chronological image" are displayed aligned in the vertical direction instead of the state display bar 40 and the video display windows 43 and 44 of the first monitoring screen G1. The graph 47 disposed at the uppermost position is the same as the graph 47 of the second monitoring screen G2 described above. The second graph 48A from the top represents a deviation amount of the height dimension of a workpiece gauged by the workpiece gauging device 56 described above from a target value on the vertical axis, and time on the horizontal axis. The third graph 48B from the top represents a deviation amount of the depth dimension of the workpiece from a target value on the vertical axis and time on the horizontal axis. The fourth graph 48C from the top represents a deviation amount of the width dimension of the workpiece from a target value on the vertical axis and time on the horizontal axis. These graphs 47 and 48A to 48C are displayed in a state where the horizontal axes thereof coincide with each other, and a horizontal axis coordinate bar 80 common thereto is displayed below the graph 48C.

Dates and times are assigned to the horizontal axis coordinate bar 80 at regular intervals. A slider 81 is displayed to be superimposed on the horizontal axis coordinate bar 80. For example, the slider 81 has a shape in which a vertical line is extended directly upward from a black spot disposed on the horizontal axis coordinate bar 80, and has the same function and operation as those of the slider 41 of the first monitoring screen G1.

Also on the third monitoring screen G3, similarly to the second monitoring screen G2, in a state where the play/stop button A2 displays the play icon, the alarm display part 45 is displayed above the graph 47. Then, when the play icon is pressed and switched to the stop icon, the video display windows 88 and 89 are displayed (not illustrated) instead of the alarm display part 45, and videos of the date and time displayed on the time display part A1 are displayed in the video display windows 88 and 89.

Next, the input operation screen G4 will be described with reference to FIG. 8. The input operation screen G4 is used to manually input events that have occurred in a certain past period. For that purpose, the input operation screen G4 includes an input operation window 29 instead of the one video display window 43 of the first monitoring screen G1. In addition, instead of the other video display window 44, an image display window 83 for displaying a part of a video as a still image is provided.

The input operation window 29 includes a time display part 29A, an event box 29B, and a remarks box 29C. Similarly to the time display part A1, the time display part 29A displays date and time corresponding to the position of the slider 41 on the state display bar 40. A still image at the date and time displayed on the time display part 29A is displayed in the image display window 83. The still image in the image display window 83 can be switched to a still image captured by the first monitoring camera 11 or a still image captured by the second monitoring camera 12 by a display switching button 84 disposed above the image display window 83.

In the event box 29B, candidates for event names to be registered are listed. Then, a cursor is displayed by placing a pointer on one of the listed event names, and in this state, when a registration button 29D below the event box 29B is turned on, the event is registered as having been performed at the date and time displayed on the time display part 29A. Then, the registered event name and date and time are displayed in the columns of "Alarm ID" and "Date and time" of the alarm display part 45.

In the remarks box 29C, candidates for remarks to be registered are listed. As in the case of the event box 29B, when one of the contents of the remarks is selected and the registration button 29D below the remarks box 29C is turned on, the content of the remark is registered as having been performed at the date and time displayed on the time display part 29A. Then, the registered content of the remark and the date and time are displayed in the columns of "Message" and "Date and time" of the alarm display part 45.

By inputting text with the keyboard 22 in a state where the cursor is displayed in the event box 29B and the remarks box 29C, any event or remark other than the listed events or remarks can be registered. Also on the input operation screen G4, the video display windows 88 and 89 can be caused to appear instead of the alarm display part 45 by operating the play/stop button A2, and videos can be displayed similarly to the second and the third monitoring screens G2 and G3. When videos are displayed in the video display windows 88 and 89, a video is displayed also in the image display window 83.

The configuration of the present embodiment has been described above. Next, functions and effects of this embodiment will be described.

For example, in a case where the transfer press machine 50 has been stopped for a certain past period, for example, when the first monitoring screen G1 is displayed on the monitor 20 by the monitoring data processing device 30A, it is possible to visually check the change of the state of the transfer press machine 50 for the certain past period on the state display bar 40. At the same time, an alarm or the like generated in the certain past period can be checked in the alarm display part 45. At this time, real-time videos of the transfer press machine 50 can be simultaneously checked in the video display windows 43 and 44. In a case where it is desired to check the video of the moment when the transfer press machine 50 stops abnormally, it is simply needed to move the slider 41 to a position immediately before the transfer press machine 50 enters the abnormal stop state (the part indicated by reference numeral 40B in FIG. 4) on the state display bar 40, and turn on the play icon of the play/stop button A2. Then, the video of the moment when the transfer press machine 50 undergoes the abnormal stop is displayed in the video display windows 43 and 44.

In order to further investigate the cause of the abnormal stop, the screen selection button B2 is turned on to display the second monitoring screen G2 on the monitor 20 as illustrated in FIG. 5. Then, the graphs 46 and 47 showing chronological changes in the current and the temperature of the main motor 57 of the transfer press machine 50 are displayed in a state where the time axes of the graphs 46 and 47 coincide with that of the state display bar 40.

For example, when a point at which the current or the temperature of the main motor 57 changes is found on the graphs 46 and 47 during the operation state before the transfer press machine 50 is brought into the abnormal stop state (the part indicated by reference numeral 40A in FIG. 5), it is simply needed to move the slider 41 to the position immediately before such a change point, and turn on the play icon of the play/stop button A2. Then, as illustrated in FIG. 6, the video display windows 88 and 89 appear instead of the alarm display part 45 illustrated in FIG. 5, and a video including a moment of the change in current or temperature is displayed. As a result, the cause of the change in current or temperature may be found. Specifically, for example, as a cause of a change in current or temperature, a situation in which sheet metal to be a material of a workpiece is deformed from a normal state, supply of lubricating oil is disrupted, smoke is generated, or the like may be found in a video.

Note that, for example, in a case where the transfer press machine 50 has not been stopped abnormally but a measure such as adjusting the lubricating oil or reducing the operation speed of the transfer press machine 50 has been taken, the taken measures can be registered as a history by turning on the screen selection button B4 to display the input operation screen G4 illustrated in FIG. 8 on the monitor 20. Thereafter, it is possible to easily check whether or not the abnormality could be avoided by the taken measures.

When a dimensional change occurs in the quality of a workpiece, it is simply needed to turn on the screen selection button B3 to display the third monitoring screen G3 illustrated in FIG. 7 on the monitor 20. Then, the change of the deviation amounts of the dimensions, which are the height, the depth, and the width, of the workpiece with respect to the target values are displayed as the graphs 48A to 48C. Therefore, in a case where a point where any dimension changes is found on the graphs 48A to 48C, the cause of the change can be found in some cases by moving the slider 81 to a position immediately before such a change point, and turning on the play icon of the play/stop button A2 to display a video.

As described above, according to the monitoring data processing device 30A of the present embodiment, the change of the state and the physical quantity of the transfer press machine 50 and the workpiece manufactured by the transfer press machine 50 during the capturing of the video in a certain past period is displayed on the monitor 20 as chronological images (the state display bar 40 and the graphs 46, 47, and 48A to 48C). In a case where an abnormality or a change is found in the transfer press machine 50 or the workpiece on the chronological image, a special position (special moment) where such an abnormality or a change is found on the chronological image can be selected with the console 23, so that the video of the selected special position (special moment) can be displayed on the monitor 20. In this manner, according to the monitoring data processing device 30A of the present embodiment, a special moment in a video of the transfer press machine 50 can be easily found and viewed.

Moreover, as illustrated in FIGS. 5 and 7, since it is possible to collectively display a plurality of types of chronological images (the state display bar 40 and the graphs 46, 47, and 48A to 48C) in a state where the plurality of types of chronological images are aligned to coincide with the time axis, it is possible to find a special moment in the video by capturing abnormalities and changes multilaterally. In addition, since date and time is displayed on the monitor 20 so that the date and time of the chronological images coincides with the time axis, it is also possible to determine a disturbance factor such as a power failure or an earthquake, for example, on the basis of a time.

### [Second embodiment]

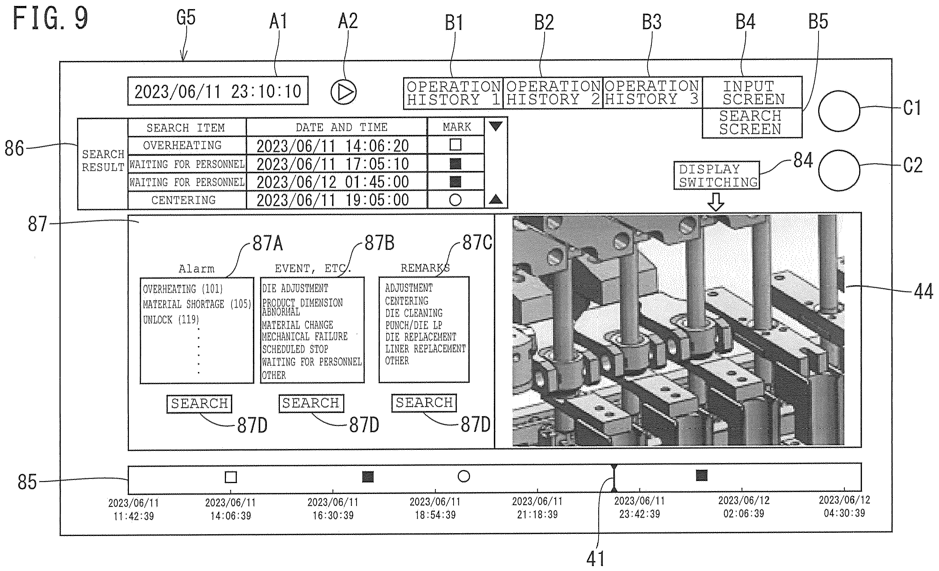

In addition to the function of the monitoring data processing device 30A of the first embodiment, the monitoring data processing device of the present embodiment can display a search operation screen G5 illustrated in FIG. 9 on the monitor 20. Specifically, a screen selection button B5 is provided on all the monitoring/operation screens G1 to G5 including the search operation screen G5, and the search operation screen G5 is displayed on the monitor 20 by turning on the screen selection button B5.

The search operation screen G5 is provided with a search operation window 87 instead of the input operation window 29 of the input operation screen G4. A state display bar 85 different from the state display bar 40 of the input operation screen G4 is provided in a lower side part, and further, a search result display part 86 is provided instead of the alarm display part 45. Further, the video display window 44 is provided instead of the image display window 83 of the input operation screen G4.

In the search operation window 87, an alarm box 87A, an event box 87B, and a remarks box 87C are arranged side by side, and among them, the event box 87B and the remarks box 87C have the same contents as those of the event box 29B and the remarks box 29C of the input operation screen G4. Candidates for alarm names to be selected are listed in the alarm box 87A. When one item in at least one of the alarm box 87A, the event box 87B, and the remarks box 87C is selected and the search button 87D is turned on, an item that matches the selected item is listed in the search result display part 86 from the history of alarms, events, and remarks in a certain past period.

The search result display part 86 is provided with fields of search item, date and time, and mark. Contents of an alarm, an event, and a remark of the matched search item are displayed in the search item field, and occurrence date and time of the matched alarm or the like is displayed in the date and time field. In addition, a mark for distinguishing the listed items is automatically attached to the mark field.

Before searching, the state display bar 85 has, for example, a shape in which the state display bar 40 is outlined. When the search results are listed in the search result display part 86, each mark in the list is displayed to be superimposed on the position of the corresponding date and time on the state display bar 85. As a result, the state display bar 85 becomes a chronological image indicating a change in the lapse of time in the state of the transfer press machine 50.

When the slider 41 is moved to a desired position on the state display bar 85 and the play/stop button A2 is turned on, the video of one of the first and the second monitoring cameras 11 and 12 corresponding to the slider 41 is displayed in the video display window 44 adjacent to the search operation window 87. In addition, the video displayed in the video display window 44 can be switched from one video of the first and the second monitoring cameras 11 and 12 to the other video by the display switching button 84 above the video display window 44.

### [Other embodiments]

In the first embodiment described above, the CPU 14 of the personal computer 13 functions as the monitoring data processing device 30A by executing the monitoring data program installed in the auxiliary storage device 17. However, for example, the monitoring data program may be executed by a cloud server, and the above-described monitoring/operation screens G1 to G5 may be displayed on a monitor of a user terminal by communication between the user terminal such as the personal computer 13 and the cloud server.

In the above embodiment, the data recording unit 25 directly acquires the video data output from the first and the second monitoring cameras 11 and 12 and the chronological data output from the controller 60. However, the video data and the chronological data may be uploaded to a cloud, and the data recording unit 25 may download and acquire the uploaded data. Alternatively, a cloud server may function as a data recording unit to store the video data and the chronological data in a storage unit of the cloud.

The console 23 of the above embodiment is the mouse 21 and the keyboard 22, but may be a touch panel.

In the first embodiment, the transfer press machine 50 is exemplified as an industrial machine, but any industrial machine may be used.

### <Supplementary note>

Hereinafter, a feature group according to the present invention including features extracted from the above-described embodiments will be described while showing effects and the like as necessary. Note that, in the following, for easy understanding, reference numerals of corresponding configurations in the above embodiments are indicated in parentheses, but these feature groups are not limited to the configurations by the reference numerals indicated in the parentheses.

### [Feature 1]

A monitoring data processing device (30A) including: a data recording unit (25) configured to acquire and store, in a storage unit (17), data of a video of an industrial machine (50) captured by a monitoring camera (11, 12), and chronological data of a state or a physical quantity of the industrial machine (50) during capturing or a workpiece manufactured by the industrial machine (50); an image display unit (26A) configured to generate a chronological image (40, 46, 47, 48A to 48C) visually indicating a change in the chronological data along a time axis from the chronological data for a certain past period and display the chronological image (40, 46, 47, 48A to 48C) on a monitor (20); a console (23) that is capable of selecting any position on the chronological image (40, 46, 47, 48A to 48C) along the time axis; and a video display unit (27A) configured to display, on the monitor (20), the video of the industrial machine (50) corresponding to a position selected with the console (23).

### [Feature 2]

The monitoring data processing device (30A) according to Feature 1, in which the chronological data stored in the storage unit (17) includes first chronological data that enables distinguishing of whether the industrial machine (50) is in an operation state or a stop state, and the chronological image (40) based on the first chronological data is generated so as to indicate the operation state or the stop state in a distinguishable manner.

### [Feature 3]

The monitoring data processing device (30A) according to Feature 2, in which the stop state of the industrial machine (50) in the first chronological data includes an abnormal stop state having an abnormality and a normal stop state having no abnormality, and the chronological image (40) based on the first chronological data is generated so as to indicate the abnormal stop state or the normal stop state in a distinguishable manner.

### [Feature 4]

The monitoring data processing device (30A) according to any one of Features 1 to 3, in which the chronological image (40) has a mode in which a bar extending along the time axis is color-coded according to a difference in the state or the physical quantity of the industrial machine (50) or the workpiece.

### [Feature 5]

The monitoring data processing device (30A) according to any one of Features 1 to 4, in which the chronological data stored in the storage unit (17) includes second chronological data of the physical quantity of the industrial machine (50) or the workpiece, and the chronological image (46, 47, 48A to 48C) based on the second chronological data is a graph (46, 47, 48A to 48C) with the time axis as a horizontal axis and the physical quantity as a vertical axis.

### [Feature 6]

The monitoring data processing device (30A) according to any one of Features 1 to 5, in which the data recording unit (25) is configured to store a plurality of types of the chronological data in the storage unit (17), and the image display unit (26A) is configured to generate a plurality of types of the chronological images (40, 46, 47, 48A to 48C) from the plurality of types of the chronological data, and to display, on the monitor (20), the plurality of types of the chronological images (40, 46, 47, 48A to 48C) together so as to coincide with the time axis.

### [Feature 7]

The monitoring data processing device (30A) according to any one of Features 1 to 6, in which the data recording unit (25) is configured to store, in the storage unit (17), date and time data of when the video is captured, and the image display unit (26A) is configured to display, on the monitor (20), the date and time based on the date and time data so that the chronological images (40, 46, 47, 48A to 48C) coincide with the time axis.

### [Feature 8]

The monitoring data processing device (30A) according to any one of Features 1 to 7, in which the image display unit (26A) is configured to display a slider (41, 81) on the monitor (20) together with the chronological image (40, 46, 47, 48A to 48C), and to move the slider (41, 81) along the time axis in accordance with an operation of the console (23).

### [Feature 9]

The monitoring data processing device (30A) according to any one of Features 1 to 8, in which the data recording unit (25) is configured to acquire data of a plurality of the videos simultaneously captured by a plurality of the monitoring cameras (11, 12) and to store the data in the storage unit (17), and the video display unit (27A) is configured to display, on the monitor (20), the plurality of the videos corresponding to a position selected with the console (23).

According to the monitoring data processing device of the above Feature 1, the change of the state or the physical quantity of the industrial machine or the workpiece manufactured by the industrial machine during the capturing of the video in a certain past period is displayed on the monitor as the chronological image. Then, in a case where an abnormality or a change is found in the industrial machine or the workpiece on the chronological image, a special position (that is, a special moment) where such an abnormality or a change is found on the chronological image can be selected with the console, so that the video of the industrial machine corresponding to the selected special position (the special moment) can be displayed on the monitor. In this way, according to an aspect of the present invention, a special moment in a video of an industrial machine can be easily found and viewed.

The chronological data relates to an industrial machine or a workpiece manufactured by the industrial machine, and may be any data as long as the data can change during capturing of a video. Examples of the chronological data of the state of the industrial machine include, in addition to Features 2 and 3, data for distinguishing between an automatic operation state and a manual operation state, data for distinguishing between an energy-saving operation state and a high-speed operation state, and the like. Examples of the chronological data of the state of the workpiece include, for example, data for distinguishing between an abnormal color state and a normal color state when a color of the workpiece is a problem, data for distinguishing between a burr-present state and a no-burr-present state when a burr of the workpiece is a problem, and the like. Examples of the chronological data of the physical quantity of the industrial machine include data of temperature, hydraulic pressure, air pressure, current, voltage, magnetism, noise, vibration, and the like of the industrial machine. Examples of the chronological data of the physical quantity of the workpiece include data such as a dimension, mass, rigidity, hardness, and temperature of the whole or each portion of the workpiece. Furthermore, the chronological image may be any image as long as the chronological image visually indicates a change in chronological data along the time axis, and examples thereof include a bar such as the above Feature 4 and a graph such as the above Feature 5.

The chronological data stored in the storage unit may be one type or a plurality of types. As in the monitoring data processing device of Feature 6, by storing a plurality of types of chronological data in the storage unit and displaying, on the monitor, the plurality of types of chronological images based on the plurality of types of chronological data together so as to coincide with the time axis, it is possible to search for a special moment in the video from multilateral determination based on the plurality of types of chronological images.

Since date and time is displayed on the monitor so that the chronological images coincide with the time axis in the monitoring data processing device of Feature 7, it is also possible to determine a disturbance factor such as a power failure or an earthquake, for example, on the basis of a time.

In the monitoring data processing device of Feature 8, the slider is displayed on the monitor together with the chronological image, and any position can be selected on the chronological image by moving the slider along the time axis, so that the selection operation of the position on the chronological image is facilitated.

The monitoring data processing device of Feature 9 can determine a cause of an abnormality by simultaneously viewing a plurality of videos at a selected time.

Note that, although specific examples of the technology included in the claims are disclosed in the present specification and the drawings, the technology described in the claims is not limited to these specific examples, and includes those obtained by variously modifying and changing the specific examples, and also includes those obtained by singly extracting a part from the specific examples.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A monitoring data processing device (30A) comprising:
a data recording unit (25) configured to acquire and store, in a storage unit (17), data of a video of an industrial machine (50) captured by a monitoring camera (11,12), and chronological data of a state or a physical quantity of the industrial machine (50) during capturing or a workpiece manufactured by the industrial machine (50);
an image display unit (26A) configured to generate a chronological image (40,46,47,48A-48C) visually indicating a change in the chronological data along a time axis from the chronological data for a certain past period and display the chronological image (40,46,47,48A-48C) on a monitor (20), and to display a slider (41,81) superimposed on the chronological image (40,46,47,48A-48C) to indicate a position on the chronological image (40,46,47,48A-48C) along the time axis;
a console (23) configured to move the slider (41,81) to any position along the time axis in a state where the chronological image (40,46,47,48A-48C) is fixed; and
a video display unit (27A) configured to display, on the monitor (20), the video of the industrial machine (50) at a time corresponding to a position of the slider (41,81), wherein
the chronological data stored in the storage unit (17) includes first chronological data that enables distinguishing of whether the industrial machine (50) is in an operation state or a stop state, and
the chronological image (40) based on the first chronological data is generated so as to indicate the operation state or the stop state in a distinguishable manner.

2. The monitoring data processing device (30A) according to claim 1, wherein
the stop state of the industrial machine (50) in the first chronological data includes an abnormal stop state having an abnormality and a normal stop state having no abnormality, and
the chronological image (40) based on the first chronological data is generated so as to indicate the abnormal stop state or the normal stop state in a distinguishable manner.

3. The monitoring data processing device (30A) according to claim 1 or 2, wherein
the chronological image (40) has a mode in which a bar extending along the time axis is color-coded according to a difference in the state or the physical quantity of the industrial machine (50) or the workpiece.

4. The monitoring data processing device (30A) according to any one of claims 1 to 3, wherein
the chronological data stored in the storage unit (17) includes second chronological data of the physical quantity of the industrial machine (50) or the workpiece, and
the chronological image (46,47,48A-48C) based on the second chronological data is a graph with the time axis as a horizontal axis and the physical quantity as a vertical axis.

5. The monitoring data processing device (30A) according to any one of claims 1 to 4, wherein
the data recording unit (25) is configured to store a plurality of types of the chronological data in the storage unit (17), and
the image display unit (26A) is configured to generate a plurality of types of the chronological images (40,46,47,48A-48C) from the plurality of types of the chronological data, and to display, on the monitor (20), the plurality of types of the chronological images (40,46,47,48A-48C) together so as to coincide with the time axis.

6. The monitoring data processing device (30A) according to any one of claims 1 to 5, wherein
the data recording unit (25) is configured to acquire data of a plurality of the videos simultaneously captured by a plurality of the monitoring cameras (11,12) and to store the data in the storage unit (17), and
the video display unit (27A) is configured to display, on the monitor (20), the plurality of videos corresponding to a position of the slider (41,81).
